Europäisches Patentamt

European Patent Office

Office européen des brevets

(11) Publication number: **0 099 745**

**A1**

(12) # EUROPEAN PATENT APPLICATION

(21) Application number: **83304147.8**

(22) Date of filing: **18.07.83**

(51) Int. Cl.³: **H 01 B 5/10**
**G 02 B 5/14, D 07 B 1/16**

(30) Priority: **19.07.82 GB 8220874**

(43) Date of publication of application:
**01.02.84 Bulletin 84/5**

(84) Designated Contracting States:
**AT BE DE FR IT NL SE**

(71) Applicant: **BICC Public Limited Company**
**21, Bloomsbury Street**
**London, WC1B 3QN(GB)**

(72) Inventor: **Gaylard, Bernard**
**27 Leigh Road**
**Hale Altringham Cheshire(GB)**

(74) Representative: **Ross Gower, Edward Lewis et al,**
**BICC plc Patents Department 38 Ariel Way Wood Lane**
**London W12 7DX(GB)**

(54) **An improved flexible elongate body.**

(57) An inexpensive and compact overhead electric conductor incorporating an optical fibre, especially suitable for use as an overhead earth conductor, has a circumferentially rigid and continuous central core 3 comprising a layer of bare metal elements 4 each having a transverse cross-section approximating to a sector of an annulus or having a transverse cross-section of such a shape that, when the conductor is in tension, the element is in inter-facial engagement with adjacent elements. The central core 3 has a bore 2 in which an optical fibre 1 is loosely housed and the central core is surrounded by a circumferentially continuous stabilising layer 8 in the form of a seamless aluminium tube or a single aluminium extrudate of C-shaped transverse cross-section whose limbs have been closed together. To reduce vibration, the outer surface of the stabilising layer may be longitudinally ribbed or grooved or may be surrounded by a layer of helically wound aluminium wires.

Fig. 1.

# AN IMPROVED FLEXIBLE ELONGATE BODY

This invention relates to flexible elongate bodies of the kind which comprise a plurality of bare elongate elements of metal or metal alloy and which are adapted to be freely supported from spaced supports in long lengths. The invention is especially, but not exclusively, concerned with overhead electric conductors of the kind which comprise one or more than one layer of bare elongate elements of electrically conductive metal or metal alloy but it is to be understood that the invention does not exclude flexible elongate bodies not normally intended to carry electric current, for instance, wire ropes.

In the Complete Specification of our Patent No. 1598438 there is described and claimed a flexible stranded body which includes at least one optical waveguide for use in the communications field adapted for transmission of light and which comprises at least one layer of helically wound bare elongate elements of metal or metal alloy, at least one elongate compartment within and extending throughout the length of the stranded body and, loosely housed in the elongate compartment or in at least one of the elongate compartments, at least one separate optical fibre and/or at least one optical bundle, as defined in the aforesaid Complete Specification.

One proposed form of flexible stranded body lying within the scope of the aforesaid patent comprises a substantially circumferentially rigid central core of metal or metal alloy having an elongate compartment within and extending throughout the length of the core; at least one optical fibre loosely housed in, and of a length substantially greater than that of, the elongate compartment; and, surrounding the central core, at least one layer of helically wound bare elongate elements of metal or metal alloy.

It is an object of the present invention to provide a simple, relatively inexpensive and compact flexible elongate body which is especially, but not exclusively, suitable for use as an overhead earth conductor.

According to the invention, the improved flexible elongate body comprises a substantially circumferentially rigid and substantially circumferentially continuous central core comprising at least one layer of bare elongate elements of metal or metal alloy, each element having a transverse cross-section of such a shape that, when the flexible elongate body is in tension, said element is in interfacial engagement with adjacent bare elongate elements, which central core has an elongate compartment within and extending through the length of the core; at least one optical fibre loosely housed in, and of a length substantially greater than that of, the elongate compartment; and, surrounding the central core, at least one substantially circumferentially continuous stabilising layer of metal or metal alloy.

The bare elongate elements of the or each layer of the central core are preferably made of steel and may be galvanized or coated with another metal or metal alloy. They may extend helically around the axis of the flexible elongate body, for instance with a long length of lay and, where the central core comprises two or more of such layers, the directions of lay of adjacent layers of bare elongate elements will be of opposite hand. In some circumstances, the elongate elements of the or each layer of the central core may extend substantially parallel to the axis of the flexible elongate body.

In one embodiment of the invention, the central core comprises a single layer of bare elongate elements, alternate elements being of substantially circular cross-section and each element interposed between two elements of substantially circular cross-section having opposed concave arcuate surfaces which, when tension is applied to the flexible elongate body, will be in interfacial engagement with the circumferential surfaces of the adjacent elements of substantially circular cross-section. In a second embodiment of the invention, the central core comprises a single layer of bare elongate elements, each element being of substantially S-shaped or Z-shaped cross-section and the elements being so arranged that a part of one element overlies and is interfacial engagement with a part of an adjacent element.

The or each stabilising layer surrounding the central core is preferably of aluminium or of an aluminium-based alloy and may be in the form of a seamless tube or a single extrudate of substantially C-shaped transverse cross-section, one or each of the limbs of the C having been folded inwardly (for instance, by passing the assembly through an appropriate die or dies) so that the gap between the free ends of the limbs is closed; the abutting free ends of the limbs may be welded together.

Where the or each stabilising layer surrounding the central core is a seamless tube, the tube may be extruded about the core or it may be a preformed tube which initially has an internal diameter substantially greater than the overall diameter of the central core and which is applied over the central core and drawn down on to the central core. Where two or more extrudates of substantially C-shaped transverse cross-section surround the central core, one extrudate surrounding the other or others, preferably the abutting free ends of the limbs of adjacent extrudates are circumferentially spaced the one from the other or others.

The stabilising layer, or the outer or outermost stabilising layer, may have circumferentially spaced around its outer surface, a plurality of longitudinally extending ribs or grooves, each preferably of approximately semi-circular cross-section, which extend helically around, or substantially parallel to the axis of, the flexible elongate body. The longitudinally ribbed or grooved outer surface of this stabilising layer assists in reducing vibration of the flexible elongate body when it is freely supported from spaced supports in long lengths. With a view to detuning a flexible elongate body having circumferentially spaced, longitudinally extending ribs or grooves on the outer surface of its stabilising layer, or its outer or outermost stabilising layer, the transverse cross-sections of the ribs or grooves and/or the circumferential spacing of the ribs or grooves and/or the lengths of lay of the ribs or grooves may vary in a random manner along the length of the flexible elongate body.

Where the outer surface of the stabilising layer, or of the outermost stabilising layer, is not longitudinally ribbed or grooved, the stabilising layer or layers may be surrounded by at least one layer of bare elongate elements of metal or metal alloy, which elements are preferably of aluminium or an aluminium-based alloy and may be helically wound around the assembly, for instance with a long length of lay, or may extend substantially parallel to the axis of the flexible elongate body. Where two or more layers of helically wound bare elongate elements surround the assembly, the directions of lay of adjacent layers will be of opposite hand.

The or each optical fibre loosely housed in the elongate compartment of the central core may be a separate optical fibre or it may be a component of an optical bundle (by which is meant a group of optical fibres or a group of fibres including at least one optical fibre and at least one non-optical reinforcing fibre or other reinforcing elongate member). The separate optical fibre or fibres and/or bundle or bundles may be supported by a flexible elongate carrier member which is loosely housed in the elongate compartment so that the required limited relative movement between the separate optical fibre or fibres and/or bundle or bundles and the flexible elongate body can take place. The flexible elongate carrier member maybe at least one tape on or within which the or each optical fibre is secured or it may be a flexible fibrous rope which is loosely housed in the elongate compartment and around which the or each optical fibre is helically wound. In the latter case, the fibrous rope is preferably made of fine glass fibre or silicon fibre in bulk form (similar to cotton wool) which will support the optical fibre or fibres in place and will act as an excellent shock absorber under vibration conditions. In a further preferred embodiment, the flexible elongate carrier member may be a tube of plastics material in which the or each optical fibre is loosely housed, the plastics tube itself being loosely housed in the elongate compartment.

The or each optical fibre may be secured to the central core at longitudinally spaced positions along the length of the flexible elongate body, the part of the or each optical fibre extending between any two adjacent positions at which the optical fibre is secured to the central core being loosely housed in, and of a length substantially greater than that of, that part of the elongate compartment extending between said two adjacent positions. The spacing between any two adjacent positions at which the optical fibre is secured to the central core will be such that, when the flexible elongate body is suspended between two towers or other upstanding supports under its own weight, the part of the optical fibre between any two adjacent positions will not be bent or otherwise distorted to such an extent that the optical transmission efficiency of the optical fibre is impaired to an undesirable extent.The or each optical fibre may be secured to the central core at each of said longitudinally spaced positions by any technique that will not have a detrimental effect on the optical transmission efficiency of the optical fibre but, in one preferred embodiment, it is secured to the central core at each position by a local deposit of resin or other material that bonds both to the optical fibre and to the internal surface of the central core. For this purpose, it is preferred to employ a high temperature performance pressure sensitive adhesive of the silicone resin type, such as that sold under the trade name Dow Corning 280A or 282 Adhesive, which may or may not be cured by the addition of a peroxide curing agent.

Those parts of the elongate compartment not occupied by the optical fibre or optical fibres may be substantially filled with a water-impermeable medium of a grease-like nature which is of such a consistency that the or each optical fibre is free to move relative to the flexible elongate body when the flexible elongate body vibrates, oscillates or is otherwise flexed. The greasy water-impermeable medium may consist of, or may comprise as a major constituent, petroleum jelly.

When the improved flexible elongate body is an overhead electric conductor, in some circumstances an electric current flowing for a limited period along the conductor, as may occur as a result of a fault or lightning, may be of such a value that there is a risk that heat generated during passage of the current will be conducted to the optical fibre or optical fibres and will result in such damage to the or each optical fibre that its light-transmission efficiency is reduced to an undesirable extent. For example, where an optical fibre is loosely housed in a plastics tube, the generated heat may cause the plastics material to soften and exert such pressure on the optical fibre loosely housed in the tube as to reduce its light-transmission efficiency to an undesirable extent. Accordingly, in some circumstances, a layer of thermally insulating material may be housed in the elongate compartment and surround the optical fibre or optical fibres. Preferably, the thermally insulating layer is a circumferentially continuous layer which is bonded or otherwise adheres to the internal surface of the central core. The layer of thermally insulating material may be firmly bonded to substantiallythe whole of the internal surface area of the central core, or the layer of thermally insulating material may adhere to mutually spaced portions of the internal surface area, any air between the thermally insulating layer and the metal central core serving as additional thermal insulation. The layer of thermally insulating material is preferably a coating of plastics thermally insulating material such as silicone rubber, polytetrafluoroethylene and other fluoroethylene polymers and co-polymers, polyetheretherketone, polycarbonates, polysulphones, polyesters and Kevlar. For enhanced thermal insulation, these plastics materials may be in cellular form.

Where, as is preferred, the elements of the central core are of steel and the or each stabilising layer is of aluminium or aluminium-based alloy, the flexible elongate member is especially suitable for use as an overhead earth conductor.

10

The invention is further illustrated by a description, by way of example, of three preferred forms of overhead earth conductor with reference to the accompanying diagrammatic drawing which shows transverse cross-sectional views of the three overhead earth conductors.

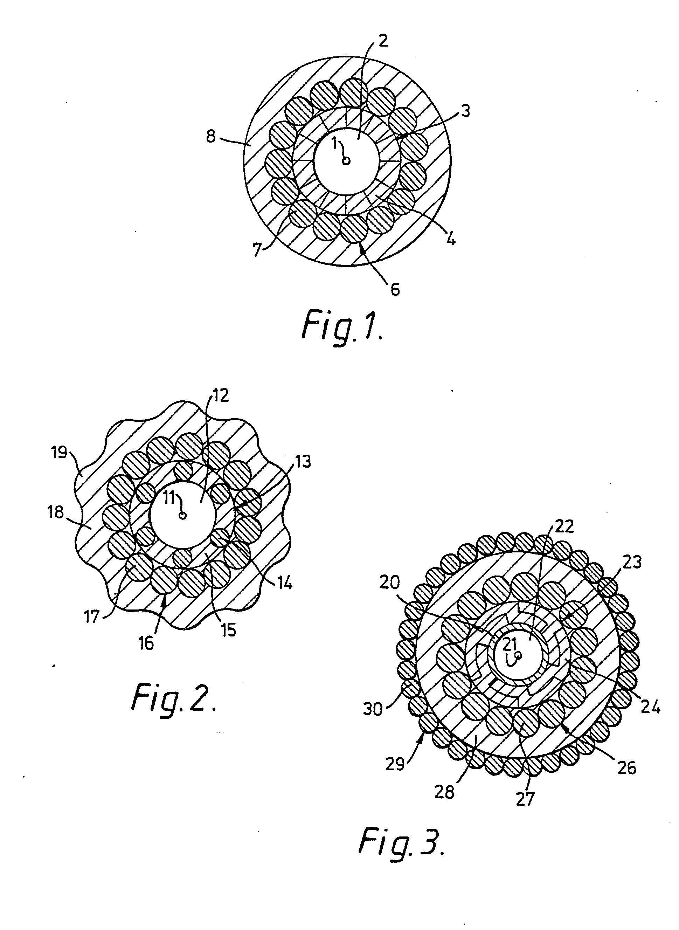

Referring to the drawing, the overhead earth conductor shown in Figure 1 comprises a central core 3 formed by a layer of twelve helically wound elongate aluminium elements 4, each having a transverse cross-section approximating to a sector of an annulus. Extending throughout the length of the central core 3 is an elongate compartment 2 in which is loosely housed an optical fibre 1 of a length substantially greater than that of the elongate compartment, for example of 1% greater length. A layer 6 of galvanized steel wires 7 surrounds the central core 3, the wires being helically laid around the central core with a long length of lay, the direction of lay of the wires being opposite to that of the helically wound elements 4. A circumferentially continuous outer stabilising layer 8 of aluminium surrounds the layer 6 of galvanized steel wires 7, the outer layer being formed from a single extrudate of substantially C-shaped transverse cross-section whose limbs have been folded inwardly (for instance by passing the assembly through an appropriate die or dies) so that the gap between the free ends of the limbs is closed. Aluminium of the stabilising layer 8 partially fills the interstices between the galvanized steel wires 7. The interstices between the galvanized steel wires 7 and the central core 3 are substantially filled with water-impermeable grease (not shown).

The overhead earth conductor shown in Figure 2 comprises a central core13 comprising a single layer of helically wound bare elongate elements of aluminium, alternate elements 14 being of circular cross-section and each element 15 interposed between two elements 14 having opposed concave arcuate surfaces which, when tension is applied to the overhead earth conductor, will be in inter-facial engagement with the circumferential surfaces of the adjacent circular elements 14. An elongate compartment 12 extends throughout the length of the central core 13 and an optical fibre 11 is loosely housed in the elongate compartment the optical fibre being greater in length than the elongate compartment. A layer 16 of galvanized steel wires 17 surrounds the central core 13, the wires being helically laid around the central core with a long length of lay, the direction of lay of the wires being of opposite hand to that of the aluminium elements 14, 15 of the central core. A circumferentially continuous outer stabilising layer 18 of aluminium surrounds the layer 16 of galvanized steel wires 17, the outer layer being a seamless tube having, circumferentially spaced around its outer surface, a plurality of helically extending ribs 19 each of approximately semi-circular cross-section. The longitudinally ribbed outer surface of the outer stabilising layer 18 assists in reducing vibration of
the overhead earth conductor when it is freely supported
from spaced supports in long lengths. Aluminium of the
stabilising layer 18 partially fills the interstices
between the galvanized steel wires 17. The interstices
between the galvanized steel wires 17 and the central
core 13 are substantially filled with water-impermeable
grease (not shown).

The overhead earth conductor shown in Figure 3
comprises a central core 23 comprising a single layer of
helically wound bare elongate aluminium elements 24 each
of substantially Z-shaped cross-section, the elements
being so arranged that a part of one element overlies
and is inter-facial engagement with a part of an
adjacent element. Extending throughout the length of
the central core 23 is an elongate compartment 22 in
which is loosely housed an optical fibre 21 of a length
substantially greater than that of the elongate
compartment. A layer 20 of plastics thermally
insulating material is bonded to the internal surface
area of the central core 23. A layer 26 of galvanized
steel wires 27 surrounds the central core 23, the wires
being helically laid around the central core with a long
length of lay, the direction of lay of the wires being
of opposite hand to that of the helically wound Z-shaped
elements 24 of the central core. A circumferentially
continuous outer stabilising layer 28 of aluminium surrounds the layer 26 of galvanized steel wires 27, the outer layer being formed from a single extrudate of substantially C-shaped transverse cross-section whose limbs have been folded inwardly so that the gap between the free ends of the limbs is closed. Aluminium of the stabilising layer 28 partially fills the interstices between the galvanized steel wires 27. A layer 29 of helicall wound bare elongate aluminium elements 30 surrounds the stabilising layer 28, the elements having a direction of lay opposite to that of the galvanized steel wires 27. The layer 29 of aluminium wires 30 assists in reducing vibration of the overhead earth conductor when it is freely supported from space supports in long lengths. The interstices between the galvanized steel wires 27 and the central core 23 and between the aluminium wires 30 and the stabilising layer 28 are substantially filled with water-impermeable grease (not shown).

14      0099745

CLAIMS:

1.      A flexible elongate body comprising a substantially circumferentially rigid and substantially circumferentially continuous central core comprising at least one layer of bare elongate elements of metal or metal alloy, which central core has an elongate compartment within and extending throughout the length of the core; and at least one optical fibre loosely housed in, and of a length substantially greater than that of, the elongate compartment; wherein each elongate element of the or each layer of the central core has a transverse cross-section approximating to a sector of an annulus or of such a shape that, when the flexible elongate body is in tension, said element is in interfacial engagement with adjacent bare elongate elements and wherein at least one substantially circumferentially continuous stabilising layer of metal or metal alloy surrounds the central core.

2.      A flexible elongate body as claimed in Claim 1, wherein the or each stabilising layer is a seamless tube of metal or metal alloy.

3.      A flexible elongate body as claimed in Claim 1, wherein the or each stabilising layer is a single extrudate of substantially C-shaped transverse cross-section, one or each of the limbs of the C having been folded inwardly so that the gap between the free ends of the limbs is closed.

4.     A flexible elongate body as claimed in any one of the preceding Claims, wherein the stabilising layer, or the outer or outermost stabilising layer, has, circumferentially spaced around its outer surface, a plurality of longitudinally extending ribs or grooves.

5.     A flexible elongate body as claimed in Claim 4, wherein the plurality of longitudinally extending ribs or grooves in the outer surface of the stabilising layer, or of the outer or outermost stabilisng layer, extend helically around the flexible elongate body.

6.     A flexible elongate body as claimed in any one of the preceding Claims, wherein the or each stabilising layer is of aluminium or of an aluminium-based alloy.

7.     A flexible elongate body as claimed in any one of Claims 1 to 3, wherein the stabilising layer or stabilising layers is or are surrounded by at least one layer of helically extending bare elongate elements of metal or metal alloy.

8.     A flexible elongate body as claimed in any one of the preceding Claims, wherein the central core comprises a single layer of helically extending bare elongate elements, alternate elements being of substantially circular cross-section and each element interposed between two elements of substantially circular cross-section having opposed concave arcuate surfaces which are in inter-facial engagement with the circumferential surfaces of the adjacent elements of substantially circular cross-section.

9.    A flexible elongate body as claimed in any one of Claims 1 to 7, wherein the central core comprises a single layer of helically extending bare elongate elements, each element being of substantially S-shaped or Z-shaped cross-section and the elements being so. arranged that a part of one element overlies and is in inter-facial engagement with a part of an adjacent element.

10.    A flexible elongate body as claimed in any one of the preceding Claims, wherein the bare elongate elements of the or each layer of the central core are of steel.

Fig.1.

Fig.2.

Fig.3.

## European Patent Office

**EUROPEAN SEARCH REPORT**

| | DOCUMENTS CONSIDERED TO BE RELEVANT | | EP 83304147.8 |
|---|---|---|---|
| Category | Citation of document with indication, where appropriate, of relevant passages | Relevant to claim | CLASSIFICATION OF THE APPLICATION (Int. Cl. ³) |
| D,Y | <u>GB - A - 1 598 438</u> (BICC) <br> * Fig. 3-5; page 4, line 100 - page 5, line 13 * | 1-10 | H 01 B 5/10 <br> G 02 B 5/14 <br> D 07 B 1/16 |
| Y | <u>DE - A1 - 2 934 684</u> (INT. STAND-ARD ELECTRIC) <br> * Fig.3; page 6, line 10 - page 7, line 8 * | 1-3 | |
| Y | <u>GB - A - 660 760</u> (FELTEN) <br> * Fig. 2,3; page 2, lines 42-53 * | 2,4-6, 9,10 | |
| Y | <u>US - A - 3 798 350</u> (CLARKE) <br> * Fig. 2; column 2, lines 8-24 * | 4-7 | TECHNICAL FIELDS SEARCHED (Int Cl ³) |
| Y | <u>FR - A - 2 498 001</u> (INT. STANDARD ELECTRIC) <br> * Fig.; claims * | 8 | H 01 B 5/00 <br> G 01 B 7/00 <br> G 02 B 5/00 <br> D 07 B 1/00 <br> D 07 B 7/00 |
| Y | <u>DE - A1 - 2 949 812</u> (LYON) <br> * Fig. 2; page 8, lines 1-7 * | 10 | |
| A | <u>GB - A - 1 055 028</u> (DIETZ) | 1,4,5 | |

The present search report has been drawn up for all claims

| Place of search | Date of completion of the search | Examiner |
|---|---|---|
| VIENNA | 20-10-1983 | KUTZELNIGG |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82